# EUROPEAN PATENT APPLICATION

(11) **EP 4 756 636 A1**
(43) Date of publication of application: **10.06.2026**
(21) Application number: 25219935.1
(22) Date of filing: 02.12.2025
(51) Int. Cl.: G06F 16/21

(54) **GENERIC HISTORICAL METRIC EXTRACTOR**

(30) Priority: 09.12.2024 US 202418973580
(71) Applicant: SAP SE, 69190 Walldorf (DE)
(72) Inventor: Mourey, Nicolas, Walldorf (DE); Sire, Philippe, Walldorf (DE)
(74) Representative: Müller-Boré & Partner Patentanwälte PartG mbB

(57) **Abstract**

An extractor engine receives one or more metric rules defining a set of metrics to extract from a source database for insertion into a target database. Also, the extractor engine retrieves a schema of the source database. Next, the extractor engine generates, based on the one or more metric rules and the schema of the source database, one or more query language statements for extracting the set of metrics from the source database for insertion into the target database. Then, the extractor engine causes the generated one or more query language statements to be executed to extract the set of metrics from the source database and insert the set of metrics into the target database. Next, a database execution engine and/or the extractor engine generates a dashboard of the plurality of metrics in the target database and causes the dashboard to be displayed in a user interface.

## Description

### TECHNICAL FIELD

The present disclosure generally relates to databases and more specifically to collecting metrics from a database source.

### BACKGROUND

Database management systems have become an integral part of many computer systems. For example, some systems handle hundreds if not thousands of transactions per second (which in-turn can generate over time a large volume of corresponding data). On the other hand, some systems perform very complex multidimensional analysis on data. In both cases, the underlying database may need to handle responses to queries very quickly in order to satisfy systems requirements with respect to transaction time. Given the complexity of these queries and/or their volume, the underlying databases face challenges in order to optimize performance including use of resources, such as memory and storage.

### SUMMARY

In some implementations, an extractor engine receives one or more metric rules defining a set of metrics to extract from a source database for insertion into a target database. Also, the extractor engine retrieves a schema of the source database. Next, the extractor engine generates, based on the one or more metric rules and the schema of the source database, one or more query language statements for extracting the set of metrics from the source database for insertion into the target database. Then, the extractor engine causes the generated one or more query language statements to be executed to extract the set of metrics from the source database and insert the set of metrics into the target database. Next, a database execution engine and/or the extractor engine generates a dashboard of the plurality of metrics in the target database and causes the dashboard to be displayed in a user interface of a computing device.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g., the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 illustrates a block diagram of an example of a database system, in accordance with some example implementations of the current subject matter;
FIG. 2 illustrates a diagram of an example of a system for extracting metrics, in accordance with some example implementations of the current subject matter;
FIG. 3 illustrates an example of a ruleset, in accordance with some example implementations of the current subject matter;
FIG. 4 illustrates an example of a rule member, in accordance with some example implementations of the current subject matter;
FIG. 5 illustrates an example of a rule and corresponding SQL statements, in accordance with some example implementations of the current subject matter;
FIG. 6 illustrates an example of a collection of rules, in accordance with some example implementations of the current subject matter;
FIG. 7 illustrates an example of a definition of a metric, in accordance with some example implementations of the current subject matter;
FIG. 8 illustrates an example of a definition of a metric with a complex condition, in accordance with some example implementations of the current subject matter;
FIG. 9 illustrates an example of a definition of a metric with a condition on another table, in accordance with some example implementations of the current subject matter;
FIG. 10 illustrates an example of a definition of a metric with a filter condition, in accordance with some example implementations of the current subject matter;
FIG. 11 illustrates a process for extracting metrics from a source database to a target database, in accordance with some example implementations of the current subject matter;
FIG. 12A depicts an example of a system, in accordance with some example implementations of the current subject matter; and
FIG. 12B depicts another example of a system, in accordance with some example implementations of the current subject matter.

### DETAILED DESCRIPTION

A data collector offers a capability to define, extract, and manage aggregated data from a global database. Each resultant piece of information is referred to as a "metric". Each metric is produced according to a rule or grammar that specifies how to generate the metric. The rule or grammar specifying how to generate a metric is referred to as a "setting". In an example, settings may be defined in an operating system (OS) environment variable or in a file. For example, a file named "metrics_rules.yaml" may be located in the settings folder of the job description, and the file may be formatted according to a yet another markup language (YAML) format. In another example, the file may be formatted according to a Javascript Object Notation (JSON) format.

In the settings file, a collection of rules may be defined. In an example, each rule includes: (1) a description used as a comment for a rule editor, (2) a reference which is the name of the table in the source database on which the metrics will be calculated, (3) a collection of metrics, and (4) a "table_name" which is the name of the table in the output database. It is noted that the name of the column in the destination database table will be the name of the metric. The system will perform the rule-associated SQL for each crawl if the rule was not performed earlier. If the system has not already performed the metric processing, tables will be created. If metrics have been added or removed in between two consecutive metric processing runs, previous metrics will remain in the destination tables, and new columns will be added in the destination tables.

Relational databases may have a huge set of data dedicated to capture the full state of metrics from every customer system. For example, a typical relational database may have a huge set of data dedicated to capture the full state of metrics captured from every customer system: 11 tables, about 240 million rows each time the collect processing (i.e., the crawl) is triggered. Doing reporting and/or dashboarding on the database requires a vast amount of resources, including the database schema required to join tables, and the introduction of complex calculations and/or logic.

Finally, collections are highly consuming in terms of server resources (e.g. random-access memory (RAM), central processing unit (CPU), hard drive) and processing time. Collecting a new crawl increases the volume of data, slows down the processing, and consumes more resource. On the other hand, it can be useful to see the evolution of the historical data over time. However, this means keeping previous crawls and causes the allocated resources and technical capacities to be exceeded. The full detailed state is not required for the historical metrics, rather only a subset of the data is needed. However, the required metrics could either correspond to information directly captured from a table or from a calculation and/or aggregation based on criteria.

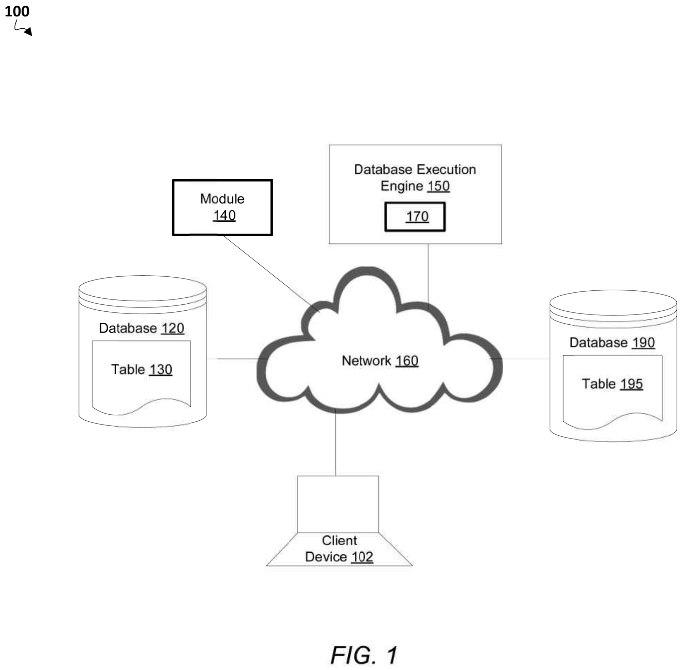

Turning now to FIG. 1, a system diagram illustrating an example of a database system 100 is shown, in accordance with one or more embodiments of the current subject matter. Referring to FIG. 1, the database system 100 may include one or more client devices 102, module 140, a database execution engine 150, and databases 120 and 190. As shown in FIG. 1, the one or more client devices 102, the module 140, the database execution engine 150, and the databases 120 and 190 may be communicatively coupled via a network 160. The databases 120 and 190 may include a variety of relational databases including, for example, an in-memory database, a column-based database, a row-based database, and/or the like. The database execution engine 150 may access a database table 130 stored at database 120 and database execution engine 150 may access a database table 195 stored at database 190, with the database tables 130 and 195 each representative of any number and type of tables.

In some example embodiments, the databases 120 and 190 may include a relational database. However, it should be appreciated that the databases 120 and 190 may include any type of database including, for example, an in-memory database, a hierarchical database, an object database, an object-relational database, and/or the like. For example, instead of and/or in addition to including a relational database, the databases 120 and 190 may include a graph database, a column store, a key-value store, a document store, and/or the like.

The one or more client devices 102 may include processor-based devices including, for example, a mobile device, a wearable apparatus, a personal computer, a workstation, an Internet-of-Things (IoT) appliance, and/or the like. The network 160 may be a wired network and/or wireless network including, for example, a public land mobile network (PLMN), a local area network (LAN), a virtual local area network (VLAN), a wide area network (WAN), the Internet, and/or the like.

To illustrate by way of an example, a given client device 102 may send a query via the database execution engine 150 to the database layer including the one or more databases 190, which may represent a persistence and/or storage layer where database tables may be stored and/or queried. Furthermore, the database execution engine 150 may provide the ability to access table storage via an abstract interface to a table adapter, which may reduce dependencies on specific types of storage and persistence layers, which may in turn enable use with different types of storage and persistence layers.

The database execution engine 150 may be configured to handle different types of databases and the corresponding persistent layers and/or tables therein. The database execution engine 150 may perform operations including rule-based operations, such as joins and projections, as well as filtering, group by, multidimensional analysis, and/or the like in such a manner so as to reduce the processing burden on the database layer. In this way, the database execution engine 150 may execute these and other complex operations, while the databases 120 and 190 can perform simpler operations to reduce the processing burden at the databases 120 and 190.

In an example, database execution engine 150 includes control unit 170 for extracting a set of metrics from database 120 and inserting the set of metrics in database 190. Alternatively, in another embodiment, module 140 may be configured to extract the set of metrics from database 120 and insert the set of metrics in database 190. In an example, module 140 may be a microservice for extracting data statistics from each landscape. It is noted that control unit 170 and/or module 140 may be implemented using any suitable combination of hardware (e.g., processing units, programmable logic, application-specific integrated circuits) and software (e.g., program instructions). In an example, control unit 170 and/or module 140 receives one or more metric rules defining a set of metrics to extract from database 120 for insertion into database 190. Control unit 170 and/or module 140 also retrieves a schema from database 120. Then, control unit 170 and/or module 140 automatically generates one or more query language statements based on the one or more metric rules and based on the schema of database 120. Next, control unit 170 and/or module 140 executes the automatically generated one or more query language statements to extract the set of metrics from database 120 and insert the set of metrics into database 190. Then, control unit 170 and/or module 140 generates a dashboard of database 190 and causes the dashboard to be displayed in a user interface of client device 102. More details on the automatic generation of query language statements and the execution of the query language statements for extracting metrics will be provided throughout the remainder of this disclosure.

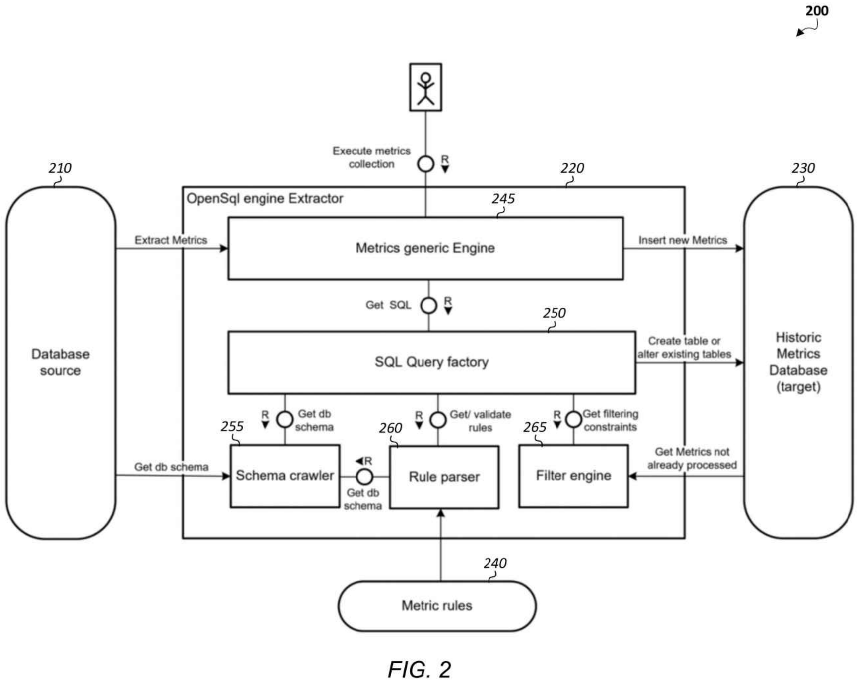

Referring now to FIG. 2, a diagram of an example of a system 200 for extracting metrics is depicted, in accordance with one or more embodiments of the current subject matter. In an example, system 200 includes source database 210, OpenSQL engine extractor 220, and target database 230. Metric rules 240 define what data to extract and how to extract the data from source database 210. In an example, metric rules 240 are generated by an end user. In an example, the end user is a product owner that is interested in following one or more key performance indicators (KPIs) over time. Metric rules 240 may be specified in one or more files in any suitable format (e.g., yaml, JSON). OpenSQL engine extractor 220 also includes rule parser 260 which retrieves and parses metric rules 240 and then provides the parsed metric rules to SQL query factory 250.

SQL query factory 250 dynamically generates SQL statements depending on the parsed metric rules and based on the schema of the source database 210. In an example, the schema of source database 210 is retrieved by schema crawler 255. Metrics engine 245 extracts metrics from source database 210 and inserts new metrics in target database 230 by using the SQL statements generated by SQL query factory 250. In an example, SQL query factory 250 will check and validate the metric rules 240 to make sure the metric rules 240 are valid before generating the SQL statements. If the metric rules 240 are not correct, then OpenSQL engine extractor 220 may generate an error message. The error message may indicate the location(s) of the error(s) in metric rules 240.

In an example, OpenSQL engine extractor 220 compares the rows that are already in target database 230 to the rows that are in source database 210 to deduce what new data should be processed. In one embodiment, OpenSQL engine extractor 220 includes filter engine 265 which provides filtering constraints to SQL query factory 250. If data already exists in one or more tables in target database 230 from previous processing runs, then filter engine 265 may detect this and prevent metrics engine 245 from retrieving this existing data from source database 210. In other words, filter engine 265 determines a first set of metrics that need to be extracted from source database 210 while excluding a second set of metrics which are already present in target database 230. Put another way, filter engine 265 generates the difference (i.e., the delta) between first data already existing in target database 230 and second data in source database 210.

OpenSQL engine extractor 220 is able to work with any type of database. Depending on the schema, SQL query factory 250 will generate a customized set of SQL statements targeting the particular type of database being targeted. This makes it easy for the user to specify metric rules 240 without any knowledge of the source database 210. OpenSQL engine extractor 220 may also retrieve a database configuration file, with the database configuration file containing the credentials of the source database 210, target database 230, the database schema, and other useful information. It is noted that OpenSQL engine extractor 220 may be referred to more broadly as an "extractor engine" or as an "extraction engine".

When OpenSQL engine extractor 220 starts processing metric rules 240, OpenSQL engine extractor 220 will check what has already been created in target database 230. If target database 230 is empty, because this is the first time OpenSQL engine extractor 220 is processing metric rules 240, OpenSQL engine extractor 220 will create the appropriate tables based on metric rules 240. For each rule of metric rules 240, there may be a new column in a given table in target database 230. Generally speaking, OpenSQL engine extractor 220 is able to create a table from scratch or add columns to existing tables in target database 230, depending on how metric rules 240 are defined and based on any previous processing runs.

As the metrics engine 245 is a generic engine, extracting data from a data source is quick and easy to implement. The definition of a simple ruleset in a JSON, yaml, or other format is sufficient to obtain the desired results. No source code evolution is required, which brings important time savings in development, testing, and infrastructure costs. To summarize, the system 200 can perform complex aggregation and filtering through the database relationship schema and based on metric rules 240.

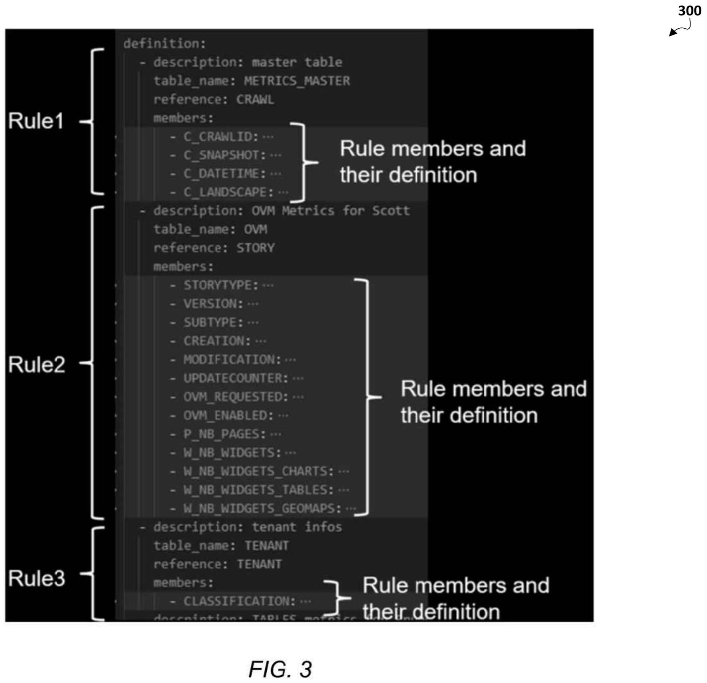

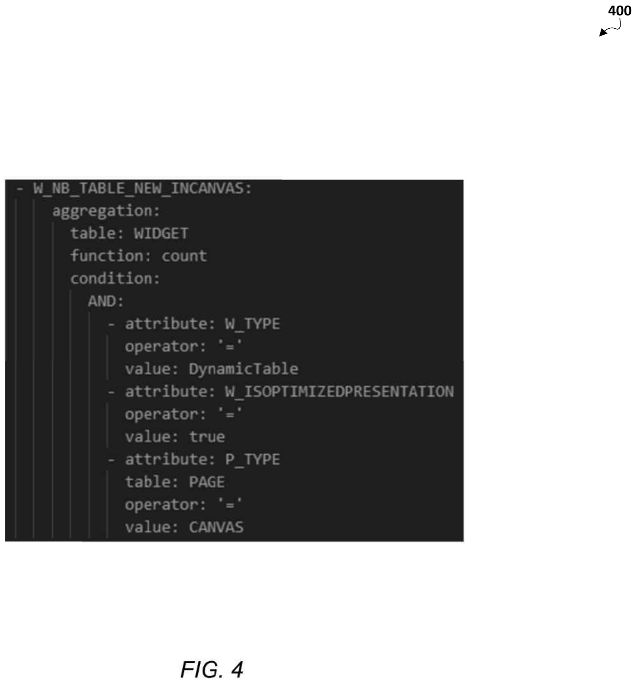

Turning now to FIG. 3, an example of a ruleset 300 is depicted, in accordance with one or more embodiments of the current subject matter. In an example, each set of rules corresponds to a result table. Each rule member describes a resulting column, including the name of the column and how the column should be collected. A rule member could be as simple as directly collecting the values from a source field. Alternatively and/or additionally, a rule member may be more complex with one or more conditions as shown in FIG. 4 for rule member 400.

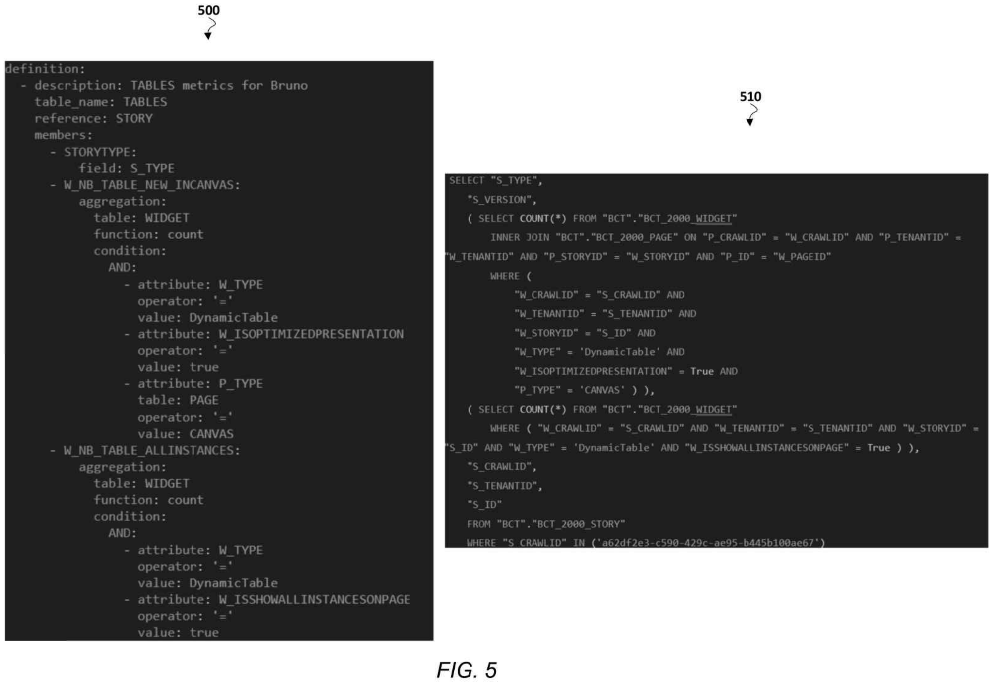

Turning now to FIG. 5, an example of a rule 500 and corresponding SQL statements 510 are depicted, in accordance with one or more embodiments of the current subject matter. As shown in FIG. 5, rule 500 has three rule members: STORYTYPE, W_NB_TABLE_NEW_INCANVAS, and W_NB_TABLE_ALLINSTANCES. When a OpenSQL engine extractor (e.g., OpenSQL engine extractor 320 of FIG. 3) retrieves rule 500, the OpenSQL engine extractor may generate SQL statements 510 (shown on the right-side of FIG. 5) based on rule 500. The OpenSQL engine extractor may deduce the main source table from the rule header in rule 500. The "Reference" field contains the name of the main source table, and the OpenSQL engine extractor will add the schema name and the prefix table name (from the configuration setting file) to deduce the full name of the table to generate the from field (FROM "BCT". "BCT _2000_ STORY"). The OpenSQL engine extractor will compare the rows that are already in the target database to the rows that are in the source database to deduce what new data needs to be processed.

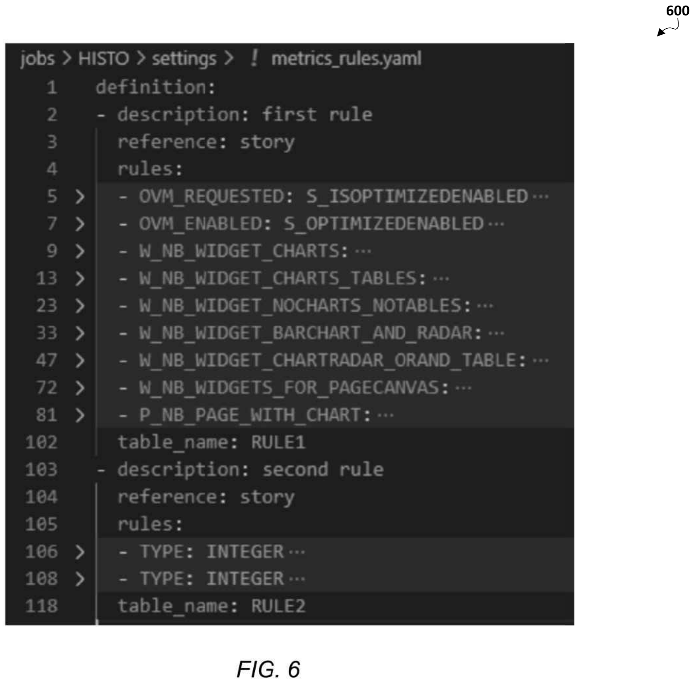

Referring now to FIG. 6, an example of a collection of rules 600 is depicted, in accordance with one or more embodiments of the current subject matter. A data collector offers a capability to define, extract, and manage aggregated data from a global database. Each resultant piece of information is referred to as a "metric". Each metric is produced according to a rule or grammar that specifies how to generate the metric. The rule or grammar specifying how to generate a metric is referred to as a "setting". In an example, settings may be defined in an operating system (OS) environment variable or in a file. For example, a file named "metrics_rules.yaml" may be located in the settings folder of the job description, and the file may be formatted according to a yaml format. In another example, the file may be formatted according to a JSON format.

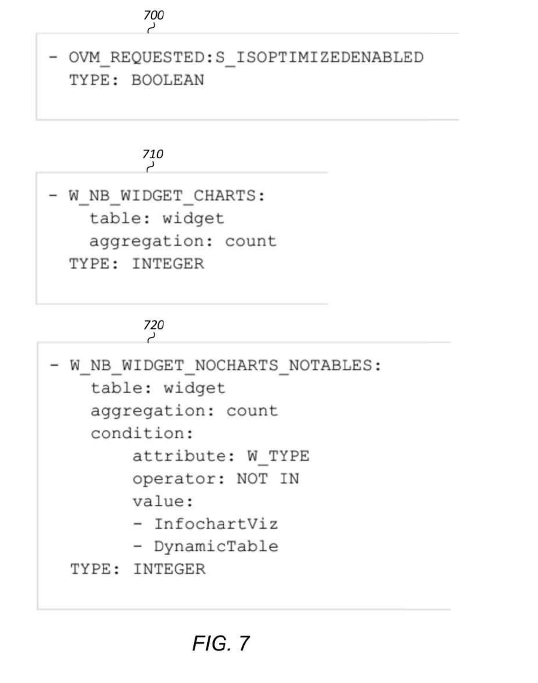

Turning now to FIG. 7, an example of a definition 700 of a metric is depicted, in accordance with one or more embodiments of the current subject matter. For metrics directly related to the reference table, definition 700 defines the database column name and the database type for the output. Also shown in the middle of FIG. 7, is an example of a definition 710 of aggregation metrics to collect the volume for charts of every page of each story. Most of the time the aggregation required is a count, however definitions will also work for aggregations that rely on other parameters. At the bottom of FIG. 7, definition 720 of aggregation metrics with a condition is shown. In the case of definition 720, the goal is to refine the expected fields using a condition. In the condition section, definition 720 specifies the attribute name of the table field, an operator, and related values.

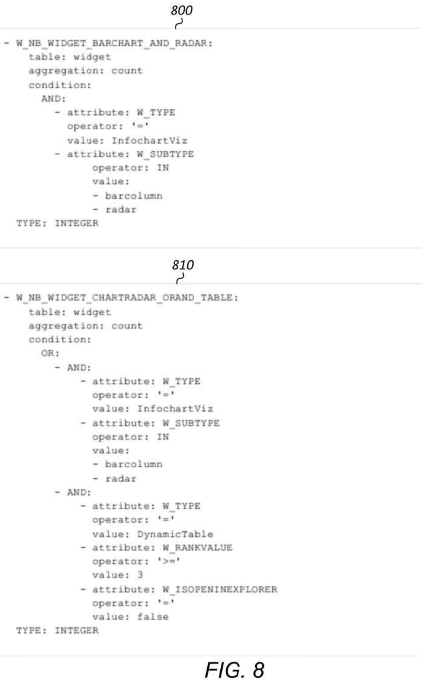

Referring now to FIG. 8, an example of a definition 800 of a metric with a complex condition is depicted, in accordance with one or more embodiments of the current subject matter. To be more powerful, a metric definition 800 may define more complex conditions correlated with OR and/or AND operators. These operators may be nested, as shown in definition 810, for more flexibility.

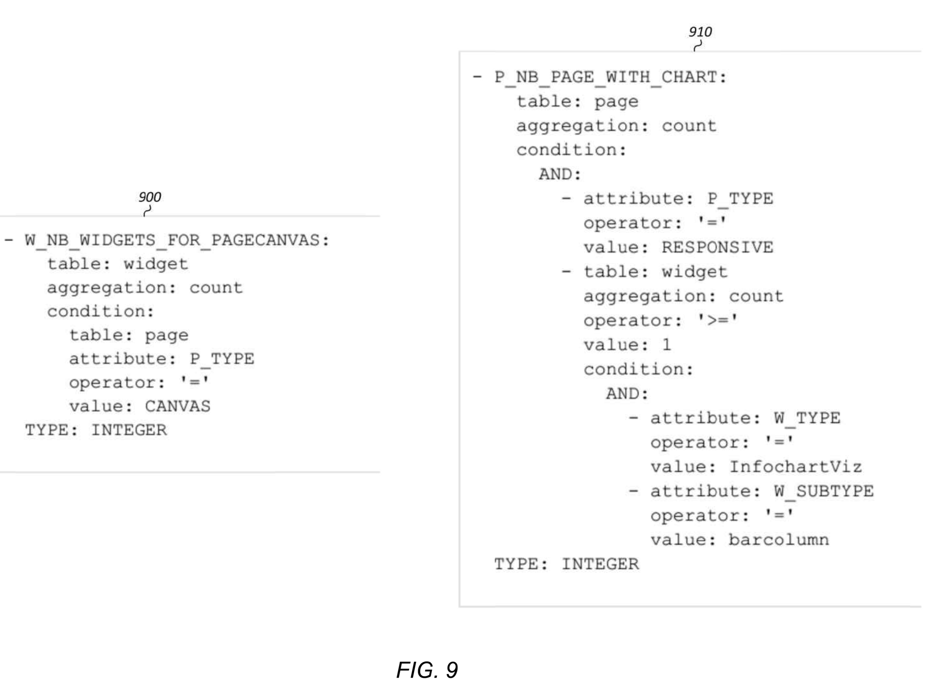

Turning now to FIG. 9, an example of a definition 900 of a metric with a condition on another table is depicted, in accordance with one or more embodiments of the current subject matter. In the previous examples, the conditions were related to the same table. However, it is possible to define a condition on another table as shown in metric definition 900 on the left-side of FIG. 9. In metric definition 900, the goal is to count the number of widgets that belong to a Canvas page. It is noted that in this case, the condition is related to a table "page" that is above the interesting table "widget" in the hierarchy. It is also possible to define a condition on a table that is after the interesting table in the hierarchy. For example, metric definition 910, shown on the right-side of FIG. 9, counts every page that has more than one bar chart widget.

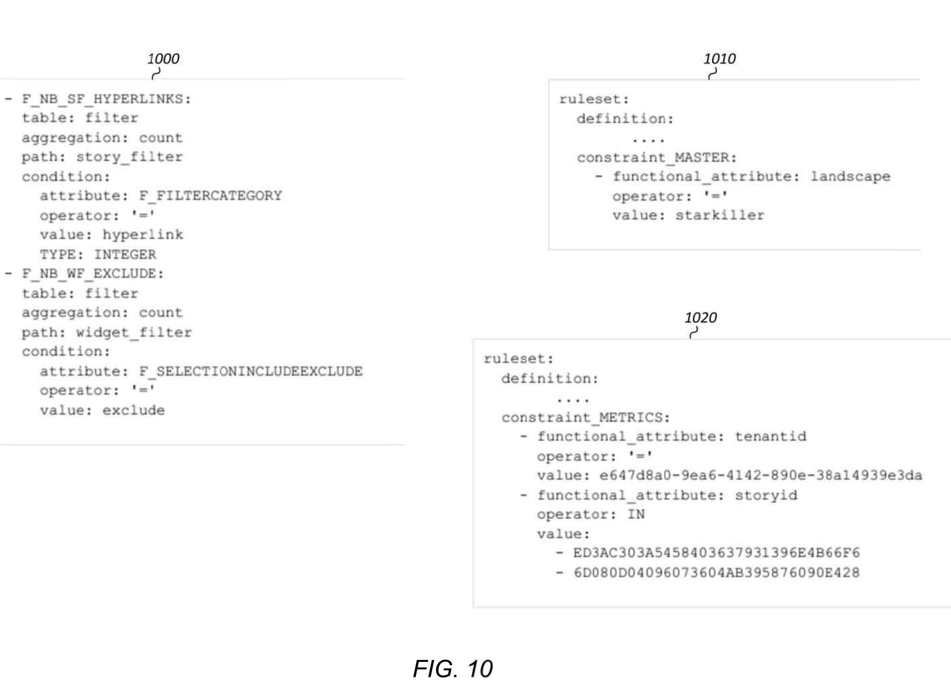

Referring now to FIG. 10, an example of a definition 1000 of a metric with a filter condition is depicted, in accordance with one or more embodiments of the current subject matter. In a bi-content tracking model, every table is in the hierarchy except for filters. Filters may be stored in a "filter" table, and filters may be correlated to widgets, stories, pages, and layers through an association. This correlation may be an N-N relation. In this case, to be able to perform some condition on a filter, the "path" the system has to use to join the tables should be specified. In the first example of definition 1000, shown on the left-side of FIG. 10, the system will set a condition of filters related to "story_filter". In the second example of definition 1000, the condition is set to "widget_filter".

In some special cases, the system may only focus on a portion of the crawls or on a portion of a reference table set. For example, the system may only focus on crawls related to a landscape. A crawl can be restricted by adding some constraints on the "master" table through "constraint_MASTER". In the example of ruleset definition 1010, shown in the upper right-side of FIG. 10, only account crawls related to the starkiller landscape will be taken.

In the same way, the system can restrict the reference table set by adding some constraints on "metrics" through "constraint_METRICS". In the example of ruleset definition 1020, shown in the lower right-side of FIG. 10, the system only takes into account entities that are related to the previously defined crawl list and entities that belong to the storyid defined in the list.

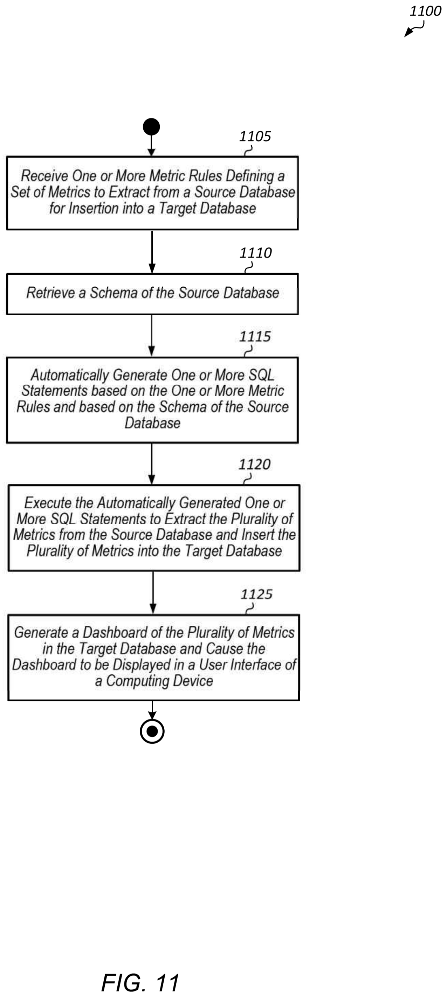

Turning now to FIG. 11, a process for extracting metrics from a source database to a target database is depicted, in accordance with one or more embodiments of the current subject matter. An extractor engine (e.g., extractor engine 220 of FIG. 2) receives one or more metric rules (e.g., metric rules 240) defining a set of metrics to extract from a source database for insertion into a target database (block 1105). Also, the extractor engine retrieves a schema of the source database (block 1110). Next, a SQL query factory (e.g., SQL query factory 250) automatically generates one or more SQL statements based on the one or more metric rules and based on the schema of the source database (block 1115). In other words, the SQL query factor generates, based on the one or more metric rules and the schema of the source database, one or more SQL statements for extracting the set of metrics from the source database for insertion into the target database. It is noted that the automatically generated one or more SQL statements are representative of any type of query language statements.

Then, the extractor engine executes the automatically generated one or more SQL statements to extract the plurality of metrics from the source database and insert the plurality of metrics into the target database (block 1120). Next, a database execution engine and/or the extractor engine generates a dashboard of the plurality of metrics in the target database and causes the dashboard to be displayed in a user interface of a computing device (block 1125). It is noted that the dashboard may also be referred to as a report. After block 1125, method 1100 may end.

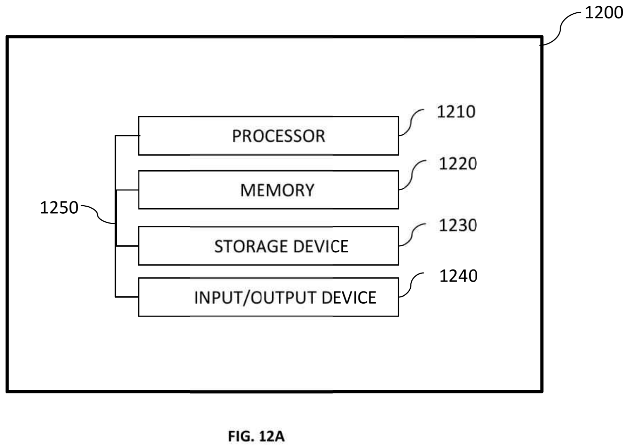

In some implementations, the current subject matter may be configured to be implemented in a system 1200, as shown in FIG. 12A. The system 1200 may include a processor 1210, a memory 1220, a storage device 1230, and an input/output device 1240. Each of the components (e.g., the processor 1210, the memory 1220, the storage device 1230, the I/O device 1240) may be interconnected using a system bus 1250. The processor 1210 may be configured to process instructions for execution within the system 1200. In some implementations, the processor 1210 may be a single-threaded processor. In alternate implementations, the processor 1210 may be a multi-threaded processor. The processor 1210 may be further configured to process instructions stored in the memory 1220 or on the storage device 1230, including receiving or sending information through the input/output device 1240. The memory 1220 may store information within the system 1200. In some implementations, the memory 1220 may be a computer-readable storage medium. In alternate implementations, the memory 1220 may be a volatile memory unit. In yet some implementations, the memory 1220 may be a non-volatile memory unit. The storage device 1230 may be capable of providing mass storage for the system 1200. In some implementations, the storage device 1230 may be a computer-readable storage medium. In alternate implementations, the storage device 1230 may be a floppy disk device, a hard disk device, an optical disk device, a tape device, non-volatile solid state memory, or any other type of storage device. The input/output device 1240 may be configured to provide input/output operations for the system 1200. In some implementations, the input/output device 1240 may include a touchscreen display capable of displaying graphical user interfaces.

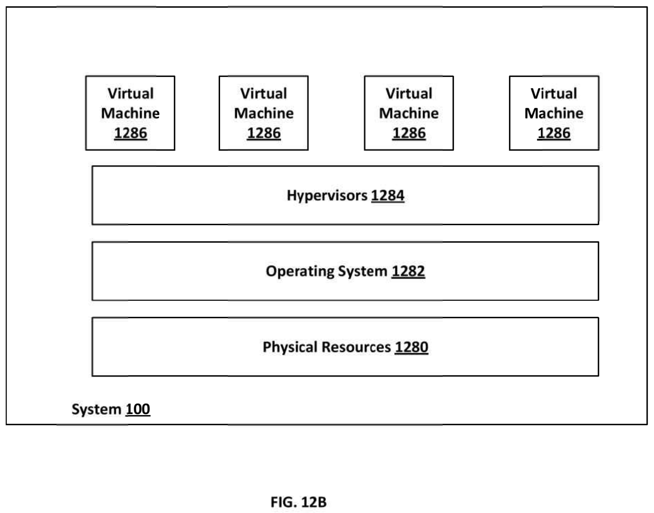

FIG. 12B depicts an example implementation of the system 100 (of FIG. 1). The system 100 may be implemented using various physical resources 1280, such as at least one or more hardware servers, at least one storage, at least one memory, at least one network interface, and the like. The system 100 may also be implemented using infrastructure, as noted above, which may include at least one operating system 1282 for the physical resources 1280 and at least one hypervisor 1284 (which may create and run at least one virtual machine 1286). For example, each multitenant application may be run on a corresponding virtual machine 1286.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any particular computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

Although ordinal numbers such as first, second and the like can, in some situations, relate to an order; as used in a document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description).

The foregoing description is intended to illustrate but not to limit the scope of the invention, which is defined by the scope of the appended claims. Other implementations are within the scope of the following claims.

These computer programs, which can also be referred to programs, software, software applications, applications, components, or code, include program instructions (i.e., machine instructions) for a programmable processor, and can be implemented in a high-level procedural and/or object-oriented programming language, and/or in assembly/machine language. As used herein, the term "machine-readable storage medium" refers to any computer program product, apparatus and/or device, such as for example magnetic discs, optical disks, memory, and Programmable Logic Devices (PLDs), used to provide machine instructions and/or data to a programmable processor, including a machine-readable storage medium that receives program instructions as a machine-readable signal. The term "machine-readable signal" refers to any signal used to provide machine instructions and/or data to a programmable processor. The machine-readable storage medium can store such program instructions non-transitorily, such as for example as would a non-transient solid state memory or a magnetic hard drive or any equivalent storage medium. The machine-readable storage medium can alternatively or additionally store such machine instructions in a transient manner, such as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including acoustic, speech, or tactile input.

The subject matter described herein can be implemented in a computing system that includes a back-end component, such as for example one or more data servers, or that includes a middleware component, such as for example one or more application servers, or that includes a front-end component, such as for example one or more client computers having a graphical user interface or a Web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

The computing system can include clients and servers. A client and server are generally, but not exclusively, remote from each other and typically interact through a communication network. The relationship of client and server arises by virtue of computer programs running on the respective computers and having a client-server relationship to each other.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:
Example 1: A system comprising: at least one processor; and at least one memory storing instructions that, when executed by the at least one processor, cause operations comprising: receiving one or more metric rules defining a set of metrics to extract from a source database for insertion into a target database; retrieving a schema of the source database; generating one or more query language statements based on the one or more metric rules and based on the schema of the source database; executing the generated one or more query language statements to extract the set of metrics from the source database and insert the set of metrics into the target database; and generating a dashboard of the set of metrics in the target database and causing the dashboard to be displayed in a user interface of a computing device.
Example 2: The system of Example 1, wherein a database source context of relations between a plurality of source tables in the source database is defined in an external file.
Example 3: The system of any of Examples 1-2, wherein the target database is a different type of database from the source database.
Example 4: The system of any of Examples 1-3, wherein the one or more metric rules are specified in an external file.
Example 5: The system of any of Examples 1-4, wherein the operations further comprise: generating a difference between first data already existing in the target database and second data in the source database; and determining, based on the difference, a first set of metrics to extract from the source database while excluding a second set of metrics corresponding to the second data already stored in the target database.
Example 6: The system of any of Examples 1-5, wherein the operations further comprise generating, for each metric rule in the one or more metric rules, a new column in a given table of the target database.
Example 7: The system of any of Examples 1-6, wherein the one or more metric rules specify one or more conditions with one or more operators.
Example 8: The system of any of Examples 1-7, wherein the one or more operators comprise nested operators.
Example 9: A computer-implemented method comprising: receiving one or more metric rules defining a set of metrics to extract from a source database for insertion into a target database; retrieving a schema of the source database; generating one or more query language statements based on the one or more metric rules and based on the schema of the source database; executing the generated one or more query language statements to extract the set of metrics from the source database and insert the set of metrics into the target database; and generating a dashboard of the set of metrics in the target database and causing the dashboard to be displayed in a user interface of a computing device.
Example 10: The computer-implemented method of Example 9, wherein a database source context of relations between a plurality of source tables in the source database is defined in an external file.
Example 11: The computer-implemented method of any of Examples 9-10, wherein the target database is a different type of database from the source database.
Example 12: The computer-implemented method of any of Examples 9-11, wherein the one or more metric rules are specified in an external file.
Example 13: The computer-implemented method of any of Examples 9-12, further comprising: generating a difference between first data already existing in the target database and second data in the source database; and determining, based on the difference, a first set of metrics to extract from the source database while excluding a second set of metrics corresponding to the second data already stored in the target database.
Example 14: The computer-implemented method of any of Examples 9-13, further comprising generating, for each metric rule in the one or more metric rules, a new column in a given table of the target database.
Example 15: The computer-implemented method of any of Examples 9-14, wherein the one or more metric rules specify one or more conditions with one or more operators.
Example 16: The computer-implemented method of any of Examples 9-15, wherein the one or more operators comprise nested operators.
Example 17: A non-transitory computer readable storage medium storing instructions, which when executed by at least one data processor, result in operations comprising: receiving one or more metric rules defining a set of metrics to extract from a source database for insertion into a target database; retrieving a schema of the source database; generating one or more query language statements based on the one or more metric rules and based on the schema of the source database; executing the generated one or more query language statements to extract the set of metrics from the source database and insert the set of metrics into the target database; and generating a dashboard of the set of metrics in the target database and causing the dashboard to be displayed in a user interface of a computing device.
Example 18: The non-transitory computer readable storage medium of Example 17, wherein a database source context of relations between a plurality of source tables in the source database is defined in an external file.
Example 19: The non-transitory computer readable storage medium of any of Examples 17-18, wherein the target database is a different type of database from the source database.
Example 20: The non-transitory computer readable storage medium of any of Examples 17-19, wherein the one or more metric rules are specified in an external file.

The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations can be within the scope of the following claims.

## Claims

1. A system comprising:
at least one processor; and
at least one memory storing instructions that, when executed by the at least one processor, cause operations comprising:
receiving one or more metric rules defining a set of metrics to extract from a source database for insertion into a target database;
retrieving a schema of the source database;
generating one or more query language statements based on the one or more metric rules and based on the schema of the source database;
executing the generated one or more query language statements to extract the set of metrics from the source database and insert the set of metrics into the target database; and
generating a dashboard of the set of metrics in the target database and causing the dashboard to be displayed in a user interface of a computing device.

2. The system of claim 1, wherein a database source context of relations between a plurality of source tables in the source database is defined in an external file; and/or
wherein the target database is a different type of database from the source database; and/or
wherein the one or more metric rules are specified in an external file.

3. The system of any one of the preceding claims, wherein the operations further comprise:
generating a difference between first data already existing in the target database and second data in the source database; and
determining, based on the difference, a first set of metrics to extract from the source database while excluding a second set of metrics corresponding to the second data already stored in the target database.

4. The system of any one of the preceding claims, wherein the operations further comprise generating, for each metric rule in the one or more metric rules, a new column in a given table of the target database.

5. The system of any one of the preceding claims, wherein the one or more metric rules specify one or more conditions with one or more operators,
wherein the one or more operators optionally comprise nested operators.

6. A computer-implemented method comprising:
receiving one or more metric rules defining a set of metrics to extract from a source database for insertion into a target database;
retrieving a schema of the source database;
generating one or more query language statements based on the one or more metric rules and based on the schema of the source database;
executing the generated one or more query language statements to extract the set of metrics from the source database and insert the set of metrics into the target database; and
generating a dashboard of the set of metrics in the target database and causing the dashboard to be displayed in a user interface of a computing device.

7. The computer-implemented method of claim 6, wherein a database source context of relations between a plurality of source tables in the source database is defined in an external file; and/or
wherein the target database is a different type of database from the source database; and/or
wherein the one or more metric rules are specified in an external file.

8. The computer-implemented method of claim 6 or 7, further comprising:
generating a difference between first data already existing in the target database and second data in the source database; and
determining, based on the difference, a first set of metrics to extract from the source database while excluding a second set of metrics corresponding to the second data already stored in the target database.

9. The computer-implemented method of any one of claims 6 to 8, further comprising generating, for each metric rule in the one or more metric rules, a new column in a given table of the target database.

10. The computer-implemented method of any one of claims 6 to 9, wherein the one or more metric rules specify one or more conditions with one or more operators.

11. The computer-implemented method of claim 10, wherein the one or more operators comprise nested operators.

12. A non-transitory computer readable storage medium storing instructions, which when executed by at least one data processor, result in operations comprising:
receiving one or more metric rules defining a set of metrics to extract from a source database for insertion into a target database;
retrieving a schema of the source database;
generating one or more query language statements based on the one or more metric rules and based on the schema of the source database;
executing the generated one or more query language statements to extract the set of metrics from the source database and insert the set of metrics into the target database; and
generating a dashboard of the set of metrics in the target database and causing the dashboard to be displayed in a user interface of a computing device.

13. The non-transitory computer readable storage medium of claim 12, wherein a database source context of relations between a plurality of source tables in the source database is defined in an external file.

14. The non-transitory computer readable storage medium of claim 12 or 13, wherein the target database is a different type of database from the source database.

15. The non-transitory computer readable storage medium of any one of claims 12 to 15, wherein the one or more metric rules are specified in an external file.
